# EUROPÄISCHE PATENTSCHRIFT

(11) **EP 3 770 325 B1**
(45) Veröffentlichungstag und Bekanntmachung des Hinweises auf die Patenterteilung: **26.02.2025**
(21) Anmeldenummer: 20020333.9
(22) Anmeldetag: 21.07.2020
(51) Int. Cl.: E01C 19/00, E01C 23/08

(54) **STEUERUNGSVERFAHREN ZUR MASCHINENFÜHRUNG IN PARALLELRICHTUNG ZU VORHANDENER LÄNGSGERICHTETEN OBERFLÄCHENSTRUKTUR UND VORRICHTUNG ZUR ANWENDUNG DIESES VERFAHRENS**
CONTROL METHOD FOR GUIDING A MACHINE IN PARALLEL DIRECTION TO AN EXISTING LONGITUDINAL SURFACE TEXTURE AND DEVICE FOR APPLYING SUCH METHOD
PROCÉDÉ DE CÔNTROLE POUR LE GUIDAGE DE MACHINES EN DIRECTION PARALLÈLE À LA COUCHE DE ROULEMENT LONGITUDINALE ÉXISTANTE ET DISPOSITIF POUR LA MISE EN OEUVRE DE CE PROCÉDÉ

(30) Priorität: 24.07.2019 DE 102019005156
(43) Veröffentlichungstag der Anmeldung: 27.01.2021
(73) Patentinhaber: Otto Alte-Teigeler GmbH, 76467 Bietigheim (DE)
(72) Erfinder: Tulke, Ralf, 29313 Hambühren (DE); Giesselmann, Lutz, 29221 Celle (DE); Hartmann, Thorsten, 29342 Wienhausen (DE)

(56) Entgegenhaltungen:
- EP-A1- 2 119 832
- CN-U- 208 088 071
- DE-A1- 2 713 591
- US-A- 3 914 064
- US-A1- 2006 230 646

## Beschreibung

Die Erfindung betrifft ein Verfahren zur Unterstützung der Führung einer Maschine parallel zu einer vorhandenen, längsgerichteten Oberflächentextur (1), welche zur Abtastung herangezogen werden kann sowie eine Vorrichtung zur Anwendung dieses Verfahrens. Hierbei wird zumindest ein Sensor und / oder Signalgeber (3) verwendet, der eine Verdrehung, Verschiebung oder Horizontalbewegung automatisiert ermittelt insbesondere ein Drehgeber. Das Verfahren und die Vorrichtung ist insbesondere geeignet zum Manövrieren von Maschinen, die sich durch eigenen Antrieb auf Oberflächen fortbewegen und entsprechende Steuersysteme haben, um die Fahrtrichtung zu bestimmen.

Aus dem Stand der Technik sind unter anderem bekannt:
Die Druckschrift US 9 121 146 B2 befasst sich mit der Berechnung von Volumina bzw. Flächen und nicht mit der Führung bzw. Steuerung von Baumaschinen. Sie zeigt eine Vorrichtung mit einem Sensor zur Tiefenmessung. Ein Sensor, der Verdrehungen ermittelt wird nicht benannt. Auch wird diese Vorrichtung nicht zur Steuerung der Maschine in Fahrtrichtung vorgesehen.

Druckschrift DE 10 2010 022 467 A1 beschreibt eine Baumaschine, die zur Oberflächenbearbeitung eingesetzt wird, z.B. eine Straßenfräsmaschine. Explizit wird hier auf die Höheneinstellung bzw. Nivelliereinrichtung verwiesen. Es geht um die höhenmäßige Einstellung der Maschine. Hierzu wird ein parallel zur Baumaschine geführter Wagen als Referenz angenommen. Es wird auch auf einen festgelegten Abstand zwischen diesem Wagen als Referenzort und der Baumaschine hingewiesen. Weiterhin wird insbesondere auf die Möglichkeit der Messung von Quer- und Längsneigungen eingegangen. Eine direkte Steuerung der Maschine in Fahrtrichtung wird nicht beschrieben.

Weder die technische Lehre aus der US 9 121 146 B2 noch aus der DE 10 2010 022 467 A1 können die Probleme beim Halten der Spur lösen.

Die EP 2 119 832 A1 zeigt ein weiteres Verfahren zur Spurführung einer Baumaschine.

Zum besseren Verständnis der Vorgehensweise soll an dieser Stelle die Definition der Oberflächentextur dargelegt werden. Eine Oberflächentextur im Straßenbau ist gemäß dem M OB, "Merkblatt für die Herstellung von Oberflächentexturen auf Verkehrsflächen aus Beton" der FGSV (Forschungsgesellschaft für Straßen- und Verkehrswesen) Ausgabe 2009 Seite 5 f. eine geometrische Gestalt der Oberfläche, die über Wellenlängen und Amplituden bestimmt werden kann. Als Textur werden Formationen bis zu einer maximalen Wellenlänge von 500 mm definiert. Alles was darüber hinaus geht stellt eine Unebenheit dar. Bei einer Kante, wie sie insbesondere in US 9 121 146 B2 erwähnt wird, handelt es sich um eine einmalige Kontur die nach unserer Auffassung als unendliche Wellenlänge angesehen werden kann. Definitiv hat sie keine Wellenlänge unter 500 mm. Es handelt sich hierbei folglich um eine Unebenheit. Folgerichtig wird in besagter Druckschrift auch von Ermittlung eines Profils gesprochen und nicht von einer Textur.

Insbesondere im Straßenbau bei der Oberflächentexturierung mittels Grindingverfahren werden einzelne Arbeitsbahnen nacheinander hergestellt, die möglichst parallel zueinander mit einer minimalen oder wenn möglich ohne Überlappung der benachbarten Bahnen auszuführen sind. Bisher erfolgt die Maschinenführung rein manuell durch einen starren Peilstab und / oder Zeiger an dem sich der Maschinenführer orientiert und die Maschine möglichst exakt über die vorhandene Lenkeinrichtung manövriert. Hierbei wird der Peilstab und / oder Zeiger, der an der Maschine befestigt ist auf die Textur der Nachbarbahn ausgerichtet. Die Linienführung der Maschine erfolgt so, dass der Peilstab und / oder Zeiger so gut wie möglich konstant über der Orientierungslinie gehalten wird. Hierbei handelt es sich um ein stark personalabhängiges Vorgehen, das hohe Konzentration und Aufmerksamkeit erfordert, da der Peilstab und / oder Zeiger aus größerer Entfernung permanent anvisiert werden muss. Das dauerhafte Starren auf eine Linie kann zum Nachlassen der Konzentration und zur Ermüdung führen. Auch können unterschiedliche und / oder wechselnde Bedingungen wie Lichteinfall, Reflektionen, optische Ungleichmäßigkeiten an der Oberfläche, Nässe usw. die Orientierung negativ beeinflussen. Insbesondere in Bereichen mit Radien / Kurven ist aufgrund des verfahrenstechnisch bedingten Abstandes zwischen Peilstab und / oder Zeiger und der eigentlichen Stelle der Oberflächenbearbeitung eine größere Auswirkung auf die Überlappungsbereiche festzustellen. Dies führt in der Praxis oftmals zu ungleichmäßigen und zu überbreiten Überlappungsbereichen zwischen einzelnen Arbeitsbahnen. Hierdurch wird die Homogenität der Oberfläche beeinträchtigt. Gerade im Bereich von Fahrbahndecken mit erhöhten Anforderungen an die Lärmminderungen kann dies zu negativen Endergebnissen am Bauwerk führen. Insoweit besteht Verbesserungsbedarf.

Auf der Suche nach einer optimierten Maschinenführung wurde auch mit optischen (z.B. Kamerasystem) und akustischen (z.B. Ultraschall) Verfahren experimentiert. Hier sind wie beim oben beschriebenen Verfahren über den Peilstab und / oder Zeiger die Einflüsse der Umgebungsbedingungen negativ zu bewerten. Nebel, Wasser auf der Oberfläche, unterschiedliche Einstrahlung von Lichtquellen sowie Verunreinigungen durch beispielsweise Schlamm, einzelnen Steinen und / oder Laub auf der Oberfläche beeinflussen die Ergebnisse der Sensormessungen negativ ebenso wie Formänderungen der Oberflächentextur beispielsweise durch lokale Schädigungen oder Verschleiß der Texturierungswerkzeuge.

Demgegenüber liegt der Erfindung das technische Problem zugrunde, ein Verfahren derart anzugeben, mit dem auf einfache und wenig aufwändige Weise einerseits eine parallel Maschinenführung mit minimalen Überlappungsbereichen benachbarter Bearbeitungsbahnen möglich ist und mit dem andererseits der Maschinenführer durch optische Orientierungshilfe und / oder automatisierte Lenkung entlastet wird, wobei die hergestellte Oberflächentextur der Straßenverkehrsfläche allen Anforderungen genügt.

Zur Lösung dieses technischen Problems lehrt die Erfindung ein Verfahren zur Unterstützung der Führung einer Maschine parallel zu einer vorhandenen, längsgerichteten Oberflächentextur, welche zur Abtastung herangezogen werden kann. Hierbei wird zumindest ein Sensor und / oder Signalgeber verwendet, der eine Verdrehung, Verschiebung oder Horizontalbewegung automatisiert ermittelt insbesondere ein Drehgeber.

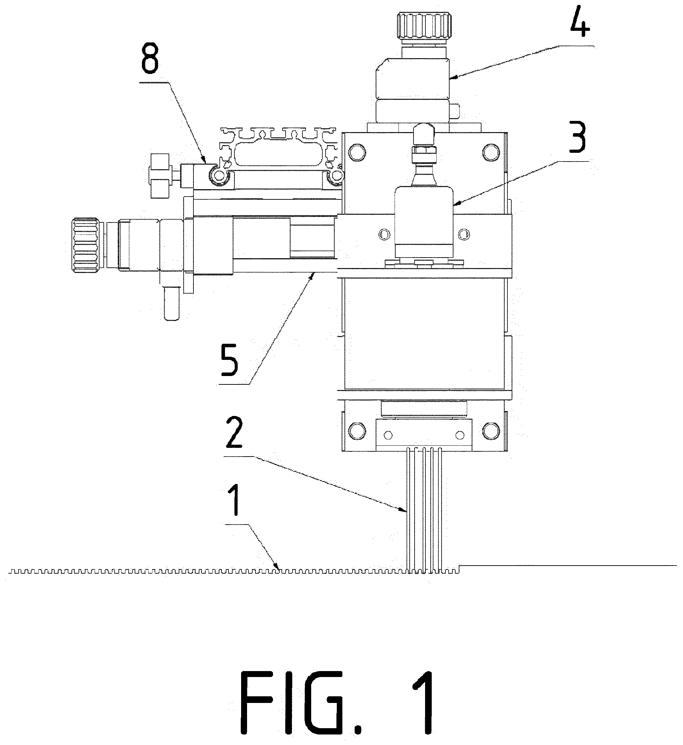

Hierzu wird in eine vorhandene längsgerichtete Oberflächenstruktur (1) ein Tastwerkzeug und / oder Führungsgegenstand (2) wie insbesondere ein Draht, ein Kamm, eine Bürste, Rollen oder Kombinationen hieraus eingelegt (Fig. 1), dass den Linien der Textur wie auf Schienen zwangsgeführt folgen soll. Das Werkzeug kann geschoben oder gezogen werden. Das Tastwerkzeug ist in Größe und Form auf die Textur, die zur Führung dient anzupassen.

Dieses Tastwerkzeug und / oder der Führungsgegenstand ist so mit einem Sensor und / oder Signalgeber (3), der eine Verdrehung, Verschiebung oder Horizontalbewegung automatisiert ermittelt (insbesondere ein Drehgeber), verbunden, dass bei einer Abweichung der Maschine von der parallelen Soll-Linie vom Sensor und / oder Signalgeber ein Signal ausgeht, das die Abweichung meldet. Das Tastwerkzeug und / oder der Führungsgegenstand bildet gemeinsam mit dem Sensor und / oder Signalgeber eine Abtasteinheit. Diese Einheit wird über eine geeignete Halterung am Rahmen der Maschine befestigt insbesondere durch Schnellspannvorrichtungen, die das schnelle Anbringen an variablen Stellen ermöglicht. Über entsprechende Verstell- und Fixiersysteme, insbesondere einem Höhenverstellsystem (4) und / oder einer Verstellvorrichtung für die horizontaler Lage (5), wird die Abtasteinheit in der gewünschten Position ausgerichtet und fixiert.

Um ein optimales Verhalten des beschriebenen Systems zu den gegebenen Arbeitsbahnen zu erreichen, können bei Bedarf diverse Verstellmöglichkeiten eingesetzt werden.
- X-Richtung / Verstellung in Arbeitsrichtung (8)
   ∘ Eine Verstellung in Arbeitsrichtung ermöglicht stufenlos die optimale Position des Tastwerkzeuges (2) relativ zu der Maschine einzustellen. Die optimale Position kann bei geraden oder kurvenartigen Arbeitsbahnen sehr unterschiedlich sein und ist zudem sehr stark von der Geometrie der Maschine abhängig (z.B. Achsabstände der Räder und die Position des Arbeitswerkzeuges)
- Y-Richtung / Verstellvorrichtung für die horizontale Lage (5)
   ∘ Bei groben / speziellen Texturen kann hiermit das Tastwerkzeug mittig der Textur ausgerichtet werden, um bestmögliche Abtastung in beide Richtungen quer zur Arbeitsrichtung zu gewährleisten.
- Z-Richtung / Höhenverstellsystem (4)
   ∘ Dient zur Einstellung der Höhe des Tastwerkzeuges (2) zu der Texturoberfläche. Dieses ist notwendig bei verschiedenen Arten von Texturstrukturen, Texturtiefen, Tastwerkzeugen, Vorspannung des Tastwerkzeuges und dessen Nachstellung bei Verschleiß.

Im Verlauf der Arbeitsausführung kann es durch die Randbedingungen insbesondere bei Querneigungs- und Gefällewechsel sowie Änderungen von Radien in Kurvenbereichen erforderlich werden, dass der Sensor und / oder Signalgeber korrigiert werden muss. Hierzu sind entsprechende Kalibriereinrichtungen vorzusehen. Es kann insbesondere die oben erwähnte Verstellvorrichtung für die horizontale Lage genutzt werden oder auch über Bedienereingaben eine rechnergestützte elektronische Korrektur des Signals erfolgen.

Das Signal des Sensors und / oder Signalgebers kann auf unterschiedliche Art und Weise genutzt werden.

Insbesondere kann ein Rechner das Signal in ein bildgebendes Verfahren zur visuellen Kontrolle der Arbeitsrichtung der Maschine umwandeln. Auf einer Art Monitor wird das Signal ausgegeben, um dem Maschinenführer die Abweichung insbesondere in Richtung und Stärke anzuzeigen, damit dieser manuell über die vorhandene Lenkeinrichtung der Maschine gegensteuern kann. Diese Vorgehensweise entlastet den Maschinenführer, da nicht mehr aus größerer Entfernung der Peilstab und / oder Zeiger anvisiert werden muss. Auch die Konzentration auf die monotone längsgerichtete Struktur entfällt. Neben der Entlastung für den Maschinenführer ist das System auch wesentlich exakter als das Anvisieren über den Peilstab und / oder Zeiger. Über entsprechend feine Sensoren können bereits geringste Abweichungen sofort und kontinuierlich detektiert werden. Des Weiteren wird die Fehleranfälligkeit infolge variabler Randbedingungen (Lichteinfall, ...) durch die automatisierte Ermittlung der Linienführung eliminiert.

Zusätzlich oder alternativ kann das Signal des Sensors und / oder Signalgebers von einem Rechner in von der Lenksteuerung direkte nutzbare Signale umgewandelt werden und zur Einspeisung in die Lenkautomatik von Maschinen genutzt werden, die einer bestimmten Linie folgen müssen. Hierbei kann das elektrische Signal über die Abweichung so an die Maschinensteuerung weitergeleitet werden, dass Lenkimpulse zu einer automatisierten Lenkbewegung führen, um der Abweichung entgegenzuwirken. Zu den oben genannten Vorteilen der geringeren Fehleranfälligkeit und der genaueren Situationsbewertung als mit dem Peilstab und / oder Zeiger kommt hierbei hinzu, dass der Maschinenführer noch weiter entlastet wird. Ihm verbleiben somit nur noch überwachende Tätigkeiten. Zudem wird die Ausführungsqualität weiter erhöht, da nicht nur die Überwachung der Linienführung kontinuierlich und automatisiert erfolgt, sondern die gesamte Maschinensteuerung bei Abweichungen sofort und automatisiert dagegen steuern kann, ohne dass der Maschinenführer hierfür reagieren muss.

Durch die präzise Steuerung können die eingangs erwähnten Überlappungsbereiche zwischen zwei benachbarten Bearbeitungsbahnen auf ein Minimum reduziert oder sogar komplett vermieden werden. Des Weiteren wird die Linienführung gleichmäßiger. Dies führt insgesamt zu einer höheren Qualität und Homogenität der Oberfläche, die durch die Maschinen bearbeitet wird.

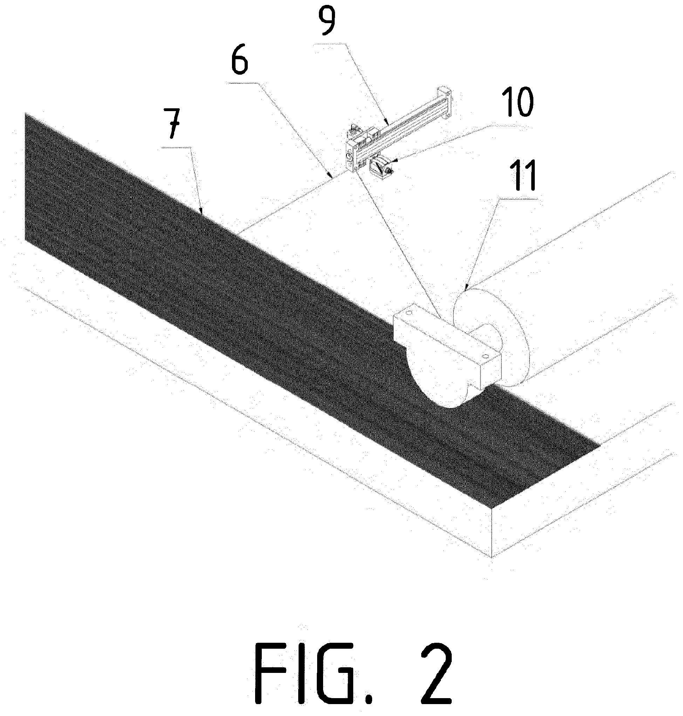

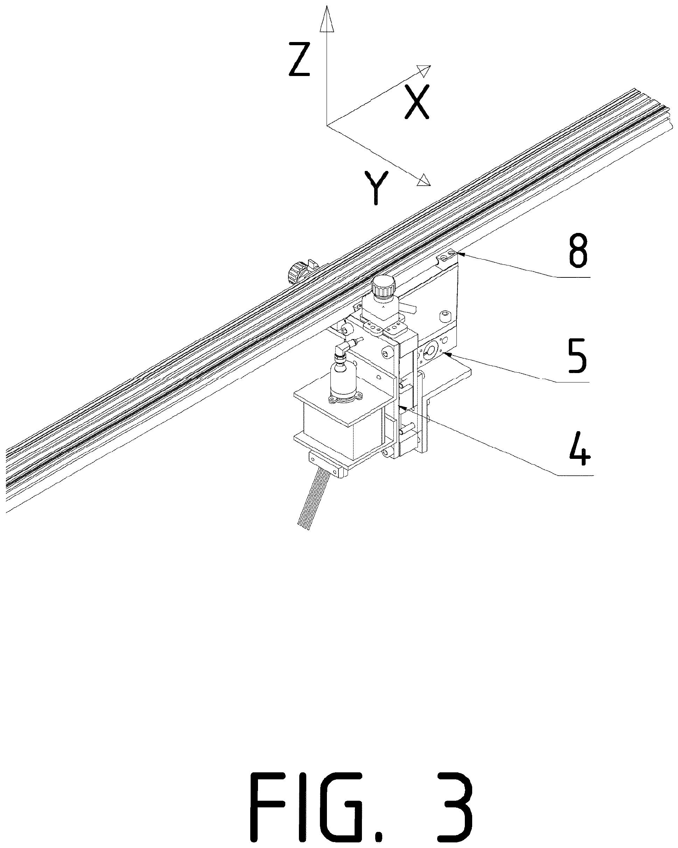

Zur Unterstützung der Überwachungstätigkeit durch den Maschinenführer kann zusätzlich ein Linienlaser (6) als Hilfsmittel zur visuellen Überprüfung angebracht werden (Fig. 2). Dieser wird auf die vorhandene längsgerichtete Oberflächenstruktur ausgerichtet (1). Hierdurch werden eine ggf. erforderliche manuelle Korrektur der Fahrtrichtung und die Kalibrierung des Sensors zur Eingabe der angepassten Nullstellung in neuer Position an die Computersteuerung erleichtert.

Sofern der Bediener aufgrund der Ausführung der Maschine keine direkte Sicht auf den Arbeitsbereich hat, kann ein zusätzliches Kamerasystem hier unterstützen. Dadurch ist die Sicht auch in engen / sicherheitsgefährdeten Bereichen möglich, um in Echtzeit die Position der Maschine zu kontrollieren und ggf. zeitnah einzuwirken.

Der Linienlaser muss bei Arbeitsbeginn auf die Außenkante des Arbeitswerkzeuges (11) bzw. Texturkante (7) ausgerichtet werden. Dieses geschieht mittels einer Horizontalverstellung (9) welche eine stufenlose Einstellung ermöglicht.

Der Linienlaser bildet eine in Fahrtrichtung gerichtete Linie auf der Arbeitsfläche dar, wodurch die horizontale Position sowie die Richtung der Maschine zu der Textur visuell dargestellt wird. Dies ist sowohl zur Prüfung während des Arbeitsvorganges wichtig als auch beim Einsetzen / Einrichten der Maschine parallel zu der bereits bearbeiteten Arbeitsbahn, damit beim Anfahren keine Kurve sondern sofort parallel gefahren werden kann. Dieses ist eine wesentliche Verbesserung da bestehenden Visiere nur einen horizontalen Punkt darstellen und nicht die Richtung.

Optional kann das oben erwähnte Höhenverstellsystem für die gesamte Abtasteinheit bestehend aus dem Sensor und / oder Signalgeber, dem Tastwerkzeug und / oder Führungsgegenstand usw. auch in elektronischer Ausführung vorgesehen werden. Hierdurch erleichtert sich die Einstellung der optimalen Höhe des Führungsgegenstandes im Betriebsmodus sowie das Ausheben der Abtasteinheit bei Nichtbenutzung (z.B. Rangierfahrten, Verladen).

### Bezugszeichenliste:

(1) Längsgerichtete Oberflächentextur
(2) Tastwerkzeug und / oder Führungsgegenstand
(3) Sensor und / oder Signalgeber
(4) Höhenverstellsystem
(5) Verstellvorrichtung für die horizontaler Lage
(6) Linienlaser
(7) Texturkante Arbeitsbahn
(8) Verstellung in Arbeitsrichtung
(9) Horizontalverstellung Laser- / Kamerasystem
(10) Kamera
(11) Außenkante Arbeitsbreite / Werkzeug

## Patentansprüche

1. Verfahren zur Unterstützung der Führung einer Baumaschine zur Oberflächenbearbeitung, insbesondere im Straßenbau, **wobei die Baumaschine ein Steuersystem zur Bestimmung der Fahrtrichtung umfasst,** parallel zu einer vorhandenen, längsgerichteten Oberflächentextur (1), welche zur Abtastung herangezogen **wird, dadurch gekennzeichnet dass** hierbei zumindest ein Sensor und/oder Signalgeber (3) verwendet wird, der gemeinsam mit und mittels Tastwerkzeug und / oder Führungsgegenstand als Abtasteinheit **die Oberflächentextur** berührend eine Verdrehung, Verschiebung und / oder Horizontalbewegung automatisiert ermittelt, insbesondere ein Drehgeber.

2. Verfahren nach einem der vorgenannten Ansprüche, wobei das Verfahren in einer Maschine zum Grinden und Grooven eingesetzt wird.

3. Verfahren nach einem der vorgenannten Ansprüche, wobei das Tastwerkzeug und / oder der Führungsgegenstand (2), insbesondere ein Draht, ein Kamm, eine Bürste, Rollen oder Kombinationen hieraus in eine vorhandene längsgerichtete Oberflächentextur (1) so eingelegt wird, dass es / er den Linien der Textur wie auf Schienen zwangsgeführt folgt, wobei das Tastwerkzeug und / oder der Führungsgegenstand geschoben oder gezogen werden kann.

4. Verfahren nach einem der vorgenannten Ansprüche, wobei das Tastwerkzeug und / oder der Führungsgegenstand so mit zumindest einem Sensor und / oder Signalgeber (3) verbunden ist, dass dieser horizontale Abweichungen oder Horizontalbewegung automatisiert ermittelt und bei einer seitlichen Abweichung der Maschine von der parallelen Soll-Linie ein Signal ausgibt, das die Abweichung meldet.

5. Verfahren nach einem der vorgenannten Ansprüche, wobei das Signal des zumindest einen Sensors und / oder Signalgeber (3) in ein Verfahren umgewandelt und als Unterstützung für den Maschinenführer insbesondere optisch oder akustisch ausgegeben wird.

6. Verfahren nach einem der vorgenannten Ansprüche, wobei das Signal des zumindest einen Sensors und / oder Signalgebers (3) in Impulse umgewandelt wird, die direkt in eine Computersteuerung der Maschinenlenkung eingespeist werden, um eine automatisierte Richtungskorrektur zu erreichen.

7. Verfahren nach einem der vorgenannten Ansprüchen, wobei zusätzlich zu einer Abtasteinheit bestehend aus dem zumindest einen Sensor und/oder Signalgeber (3) und dem Tastwerkzeug / Führungsgegenstand (2) ein Linienlaser (6) angebracht wird, der auf die vorhandene längsgerichtete Oberflächenstruktur ausgerichtet wird (7) und die Überwachungstätigkeit des Maschinenführers unterstützt.

8. Verfahren nach einem der vorgenannten Ansprüchen, wobei zusätzlich zu einer Abtasteinheit bestehend aus dem zumindest einen Sensor und/oder Signalgeber (3) und dem Tastwerkzeug / Führungsgegenstand (2) ein Kamerasystem (10) angebracht wird, das auf die vorhandene längsgerichtete Oberflächenstruktur (7) und den evtl. vorhandenen **Linienlaser** (6) ausgerichtet wird und die Überwachungstätigkeit des Maschinenführers unterstützt.

9. Verfahren nach einem der vorgenannten Ansprüchen, bei dem die gesamte Abtasteinheit bestehend aus dem zumindest einen Sensor und/oder Signalgeber (3) und dem Tastwerkzeug / Führungsgegenstand (2) mit einem Höhenverstellsystem ausgestattete wird, um die Einstellung der Höhe im Betrieb oder auch zum Ausheben der Einheit zu erleichtern.

10. Vorrichtung zur Unterstützung der Führung einer Baumaschine **gekennzeichnet durch** zumindest **einen Sensor und/oder einen Signalgeber (3), insbesondere** ein Drehgeber, und ein Tastwerkzeug / Führungsgegenstand (2), das / der in eine längsgerichtete Oberflächentextur eingelegt werden kann, **um diese berührend abzutasten,** und mit einem Rechner oder einer Maschinensteuerung, der / die eingerichtet ist, ein Verfahren nach einem der vorgenannten Ansprüche auszuführen.

11. Eine Vorrichtung aus Anspruch 10, die mit einem Linienlaser und / oder einem Kamerasystem zur Vereinfachung der Überwachungsarbeiten und / oder Einstell- und / oder Fixiermöglichkeiten in x-, y- und z- Achse, also in alle Richtungen, ausgestattet ist.

## Claims

1. A method for supporting the guidance of a construction machine for surface processing, especially in road construction, where the construction machine includes a control system for determining the direction of travel parallel to an existing longitudinal surface texture, which is used for scanning, **characterized in that** at least one sensor and/or signal transmitter is used, which, together with and by means of a scanning tool and/or guide object as a scanning unit, touching the surface texture, automatically determines a rotation, displacement, and/or horizontal movement, especially a rotary encoder.

2. The method according to one of the preceding claims, wherein the method is used in a machine for grinding and grooving.

3. The method according to one of the preceding claims, wherein the scanning tool and/or the guide object, especially a wire, a comb, a brush, rollers, or combinations thereof, is inserted into an existing longitudinal surface texture in such a way that it/they follow the lines of the texture like on rails, whereby the scanning tool and/or the guide object can be pushed or pulled.

4. The method according to one of the preceding claims, wherein the scanning tool and/or the guide object is connected to at least one sensor and/or signal transmitter in such a way that it automatically determines horizontal deviations or horizontal movement and, in the event of a lateral deviation of the machine from the parallel target line, emits a signal that reports the deviation.

5. The method according to one of the preceding claims, wherein the signal of at least one sensor and/or signal transmitter is converted into a method and output as support for the machine operator, especially visually or acoustically.

6. The method according to one of the preceding claims, wherein the signal of at least one sensor and/or signal transmitter is converted into impulses that are fed directly into a computer control of the machine steering to achieve automated direction correction.

7. The method according to one of the preceding claims, wherein, in addition to a scanning unit consisting of at least one sensor and/or signal transmitter and the scanning tool/guide object, a line laser is attached, which is aligned with the existing longitudinal surface texture and supports the monitoring activity of the machine operator.

8. The method according to one of the preceding claims, wherein, in addition to a scanning unit consisting of at least one sensor and/or signal transmitter and the scanning tool/guide object, a camera system is attached, which is aligned with the existing longitudinal surface texture and the possibly existing line laser and supports the monitoring activity of the machine operator.

9. The method according to one of the preceding claims, wherein the entire scanning unit consisting of at least one sensor and/or signal transmitter and the scanning tool/guide object is equipped with a height adjustment system to facilitate the adjustment of the height during operation or for lifting the unit.

10. A device for supporting the guidance of a construction machine **characterized by** at least one sensor and/or a signal transmitter, especially a rotary encoder, and a scanning tool/guide object, which can be inserted into a longitudinal surface texture to scan it by touch, and with a computer or machine control, which is set up to execute a method according to one of the preceding claims.

11. A device according to claim 10, which is equipped with a line laser and/or a camera system to simplify monitoring work and/or adjustment and/or fixing options in the x, y, and z axes, i.e., in all directions.

## Revendications

1. Procédé pour assister à la conduite d'une machine routière pour le traitement de surface, en particulier lors de travaux routiers, où la machine routière possède un système de guidage pour déterminer la direction de déplacement, parallèle à la couche de roulement longitudinale existante (1), qui est utilisée pour le repérage marqué avec au moins un capteur et/ou un émetteur de signal (3) , qui, conjointement avec et au moyen d'un appareil de palpation et/ou d'un instrument de guidage en tant qu'unité de palpation, détecte automatiquement une rotation, un déplacement et/ou un mouvement horizontal en touchant la couche de roulement, en particulier un encodeur rotatif.

2. Procédé selon les exigences précédentes, quand il est utilisé dans une machine pour le Grinding ou le Groowing.

3. Procédé selon l'une des exigences précédentes, où l'appareil de palpation et/ou l'instrument de guidage (2), en particulier un fil, un peigne, une brosse, des rouleaux ou des combinaisons de ceux-ci, est inséré dans la couche de roulement longitudinale existante (1) de telle manière qu'il/elle suit les lignes de la texture comme sur des rails, où l'appareil de palpation et/ou l'instrument de guidage peut être poussé ou tiré.

4. Procédé selon l'une des exigences précédentes, où l'appareil de palpation et/ou l'instrument de guidage est connecté à au moins un capteur et/ou un émetteur de signal (3) de telle manière que ce dernier détecte automatiquement les écarts horizontaux ou les mouvements horizontaux et émet un signal en cas d'écart latéral de la machine par rapport à la ligne de consigne parallèle, signalant l'écart.

5. Procédé selon l'une des exigences précédentes, où le signal du ou des capteurs et/ou émetteurs de signal (3) est converti en une procédure et est émis comme support pour l'opérateur de la machine, en particulier visuellement ou acoustiquement.

6. Procédé selon l'une des exigences précédentes, où le signal du ou des capteurs et/ou émetteurs de signal (3) est converti en impulsions qui sont directement introduites dans un contrôle informatique de la direction de la machine pour atteindre une correction de direction automatisée.

7. Procédé selon l'une des exigences précédentes, où en plus d'une unité de palpation composée d'au moins un capteur et/ou émetteur de signal (3) et de l'instrument de palpation/objet de guidage (2), un laser de ligne (6) est installé, qui est aligné sur la couche de roulement longitudinale existante (7) et soutient l'activité de surveillance de l'opérateur de la machine.

8. Procédé selon l'une des exigences précédentes, où en plus d'une unité de palpation composée d'au moins un capteur et/ou émetteur de signal (3) et de l'instrument de palpation/objet de guidage (2), un système de caméra (10) est installé, qui est aligné sur la couche de roulement longitudinale existante (7) et le laser de ligne éventuellement présent (6) et soutient l'activité de surveillance de l'opérateur de la machine.

9. Procédé selon l'une des exigences précédentes, où l'ensemble de l'unité de palpation composée d'au moins un capteur et/ou émetteur de signal (3) et de l'unité de palpation/objet de guidage (2) est équipé d'un système de réglage de la hauteur pour faciliter le réglage de la hauteur en fonctionnement ou pour soulever l'unité.

10. Dispositif pour assister la conduite d'une machine routière **caractérisé par** au moins un capteur et/ou un émetteur de signal (3), en particulier un codeur rotatif, et une unité de palpation/objet de guidage (2), qui peut être inséré dans une couche de roulement longitudinale pour la palper en la touchant, et avec un ordinateur ou un contrôle de machine, qui est configuré pour exécuter une procédure selon l'une des exigences précédentes.

11. Dispositif selon l'exigence 10, équipé d'un laser de ligne et/ou d'un système de caméra pour simplifier les travaux de surveillance et/ou les possibilités de réglage et/ou de fixation dans les axes x, y et z, donc dans toutes les directions.
